## Europäisches Patentamt
## European Patent Office
## Office européen des brevets

(19)

(11) Publication number : **0 197 910 B1**

(12) # EUROPEAN PATENT SPECIFICATION

(45) Date of publication of patent specification :
**11.12.91 Bulletin 91/50**

(51) Int. Cl.⁵ : **B60N 2/28**

(21) Application number : **86850118.0**

(22) Date of filing : **08.04.86**

(54) **Child seat for use in a vehicle.**

(30) Priority : **12.04.85 SE 8501800**

(43) Date of publication of application :
**15.10.86 Bulletin 86/42**

(45) Publication of the grant of the patent :
**11.12.91 Bulletin 91/50**

(84) Designated Contracting States :
**AT BE CH DE FR GB IT LI LU NL SE**

(56) References cited :
**EP-A- 0 094 318
DE-A- 2 327 835
FR-A- 2 296 354
US-A- 3 099 486
US-A- 3 910 634**

(73) Proprietor : **SLG PRODUKTER AB
Ättehögsgatan 5 B
S-416 74 Göteborg (SE)**

(72) Inventor : **Flyborg, Sven-Erik
Ättehögsgatan 5 B
S-416 74 Göteborg (SE)**

(74) Representative : **Graudums, Valdis et al
Albihn West AB Stora Nygatan 15
S-411 08 Göteborg (SE)**

## Description

The present invention relates to a child seat, more precisely a child seat in a vehicle and of the type comprising a seat member, a back member and side members.

The problem according to the invention is to accomplish a seat structure that represents an optimum of simplicity when mounting in practically any vehicle and at the same time provides a maximum of safety.

The structure aimed at should also be such that it is optional to mount the seat in the forward or backward direction of the vehicle, in the front seat or back seat of the vehicule.

The structure should also be such that the seat is easy adaptable to the body size of the child.

Today there exist a great variety of very excellent child seats. In most cases the safety is very good.

FR-A7-2 296 354 discloses (see first part of Claim 1) a child seat for use in the back or front seat of a vehicle and for placing the child in the forward direction in the back seat and in the opposite direction in the front seat. The child seat has attachment straps for securing the child seat to the vehicle. The attachment, however, is customized and requires specific points of attachment in the vehicle body. Additionally the attachment straps are secured to the child seat by pivotable brackets mounted to the child seat by bolts placed in through-going openings adversely decreasing the strength of the child seat.

Further on, the mounting of child seats as in said French patent or child seats of a similar type may cause very much trouble in spite of the fact that the seats are accompanied by comprehensive mounting instructions.

Disregarding the fact that it may be difficult to identify the correct points of attachment to the structural elements of the vehicle, sometimes the vehicle has been modified as to the structure thereof without "adapting" the mounting instruction.

Thus, it would be extremely desirable to offer a child seat which cannot be mounted wrongly in practice - not even by technically completely unskilled individuals.

The main object of the invention is that which just has been said.

A further object is to accomplish a simple adjustment of the seat member angle of the seat.

A further object is to make the easy mountable and easy angle adjustable child seat adapted to the actual body size of the child.

The invention provides a child seat for use on an existing vehicle seat, the child seat comprising a seat member, a back member, side members and a surface layer and having attachment straps for securing the child seat to the vehicle seat.

The child seat is distinguished in that the attachment straps are placable around the vehicle seat for maintaining the child seat against the vehicle seat by tightening the straps, and that an anchoring member is attached to the child seat and is arranged to be gripped by an existing vehicle belt.

In one embodiment at least the seat comprises a surface layer of which at least the seat member is of a high strength material, and that said attachment straps are fixed to said high strength surface layer.

In a specific embodiment the anchoring member is attached to the layer of high strength material of the child seat.

In a further embodiment the straps are arranged for tightening also an insert pillow, preferably of a somewhat resilient material, between the bottom of the seat and the seat in the vehicle.

In one embodiment the layer of high strength material comprises at least one plate.

The attachment straps can comprise two length adjustable straps attached to the plate at the front edge of the child seat, and two strap fastening members at the back edge of the child seat.

In a preferred embodiment the child seat has means to fix the vehicle belt for placing the child seat with the back member thereof in the driving direction, and that the seat member angle of the child seat is determined by the position of the insert pillow, the child seat being such that the back member thereof has at least a portion for abutment against the instrument panel of the vehicle.

Preferably, the plate covers the major part of the bottom side of the seat member and also the major part of the outside of the back member.

The sides of the seat are arranged to extend along the seat member as well as the back member and are arranged to accomodate adaption inserts that adapt the child seat to the body size of the child seat passenger.

In a further embodiment of the invention the layer of a high strength material comprises a fibre fabric reinforced layer of wear resistant material.

Preferably, the layer extends along the entire back of the child seat including the back member and up onto the side members of the seat.

The fibre fabric may, advantageously, comprise carbon fibres and the wear resistant material may comprise a plastics material.

The invention will now be exemplified by reference to the accompanying drawings, where

Figure 1 in a schematic view shows the child seat placed generally horizontal in a vehicle,

Figure 2 shows the child seat inclined,

Figure 3 shows in a side view a second embodiment of the child seat according to the invention,

Figure 4 shows details of the child seat in Figure 3,

Figure 5 is a view from above of the child seat in Figure 3 and 4,

Figure 6 is a partial section view of one back corner of the child seat, and

Figure 7 is a partial section view of the child seat according to the second embodiment of the invention.

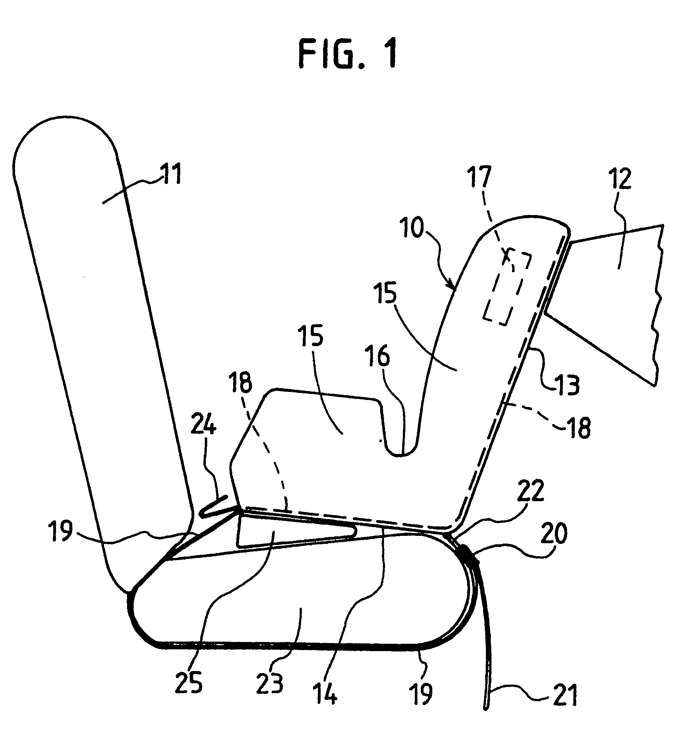

In Figure 1 there is shown a child seat 10 placed on the front seat 11 in a vehicle. The reference numeral 12 denotes a portion of the instrument panel of the vehicle against which the back 13 of the seat 10 abuts.

The child seat 10 comprises a seat member 14, a back member 13 and side members 15 on both sides of the seat member and the back member, substantially along the entire depth and height thereof. In each side there is a cut-out 16 which in a manner known per se is arranged to fix the hip belt of the vehicle when the seat is mounted in the driving direction of the vehicle. Along the sides of the seat there are known means 17 for fixing the position of the diagonal belt of the vehicle.

A plate 18, preferably of metal, or metal plates joined to each other are arranged for covering substantially the entire bottom 14 of the seat member and the back member 13. A pair of straps 19 of a high strength material (only one shown in the figure) are attached at the front edge of the child seat plate and are provided with means 20 for length adjustment at the free strap end 21. Said means for length adjustment has a coupling member which is placed in an attachment member 22 anchored to the plate 18, and preferably having the same type of strap as the strap 19.

As appears from the figures the free strap end 21 is easy available at the front edge of the vehicle seat for allowing the correct placement relative the seat 23.

At the front edge of the seat member of the child seat there is an anchoring member 24 attached to the plate 18 or integrally formed with the plate. The hip belt 28 of the vehicle is intended to be brought into the hook that is shown and by means of a suitable length adjusting means safely fix the child seat from being released in case of a collision or heavy braking.

The angle of the seat 10 relative the horizontal plane is set by means of an insert 25, preferably of a somewhat resilient material. The placement of this insert relative the front edge of the seat member of the seat, and of course the size of the insert as well as the degree of compression thereof, if the insert is resilient, determines the angle of the seat.

As the angle positioning of the seat is obtained by rotating the seat unhindered around a line coinciding with the lower edge of the seat, and as this may be accomplished together with a feasible adjustment of the vehicle seat 11 in the longitudinal direction, in practice there will be obtained an unlimited number of adjustment positions for all existing actual body sizes. There are inserts 25 in different dimensions as might be required.

In excess to angle adjustment, which basically is a continous adjustment, the sides 15 of the seat are provided with means, for instance of a Velcro-type, for attaching of an adaption insert 27 of a suitable thickness and thereby adaption of the width of the seat member and the back member to the actual body size.

By means of the possibilities of variation obtained by using different adaption inserts 25 and 27, the seat may be used for children upto 7 years.

It is not necessary to arrange the anchoring member 24 at the front edge of the seat, it may for instance be placed under the bottom 14 or at another place.

The seat may be tightened by means of the straps 19 and the hip belt 28 without having the back 13 of the seat abutting against the instrument panel.

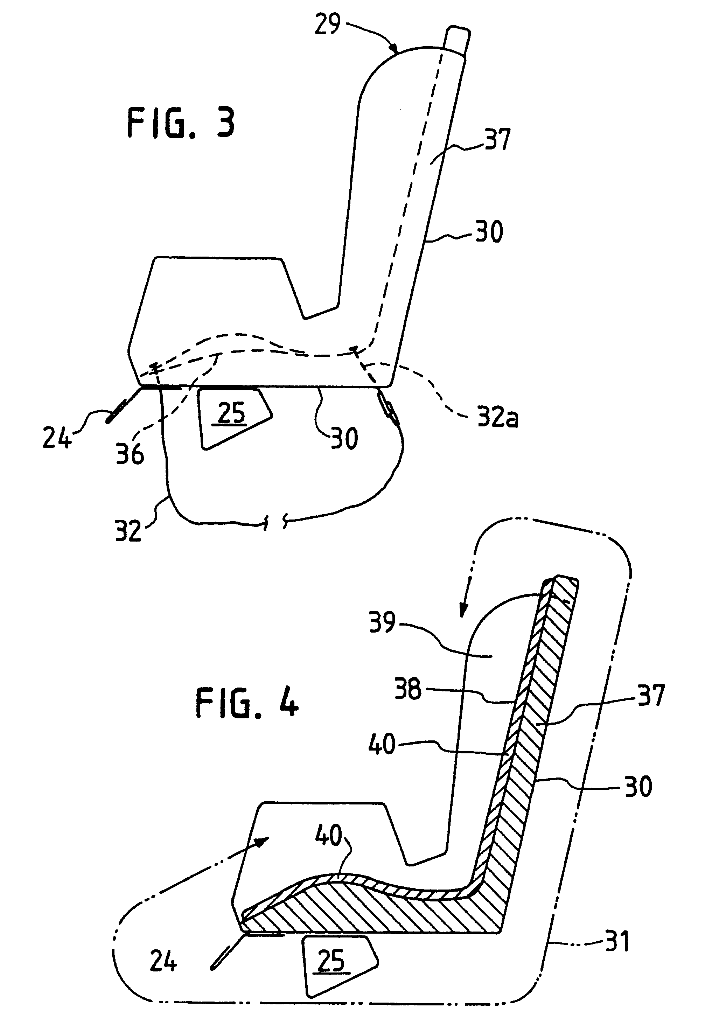

The seat 29 in Figure 3 has a modified reinforcement.

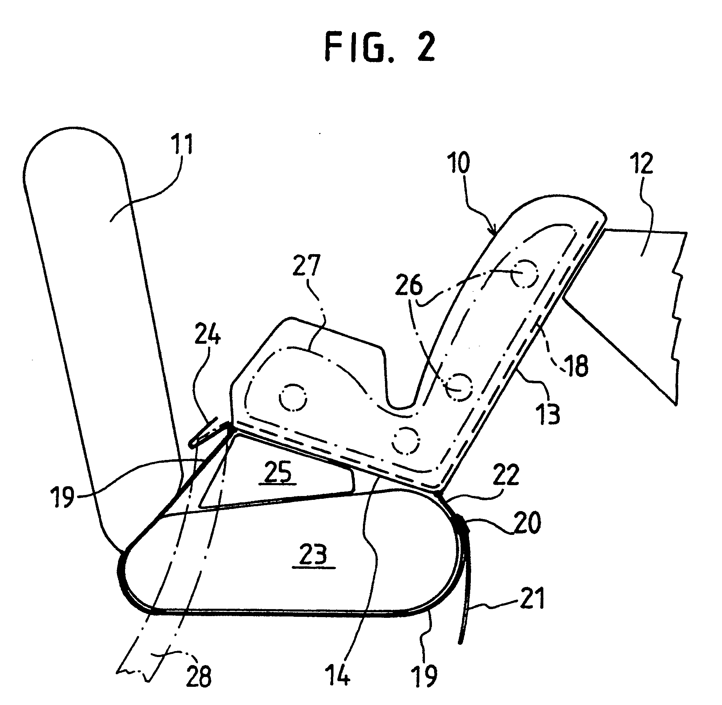

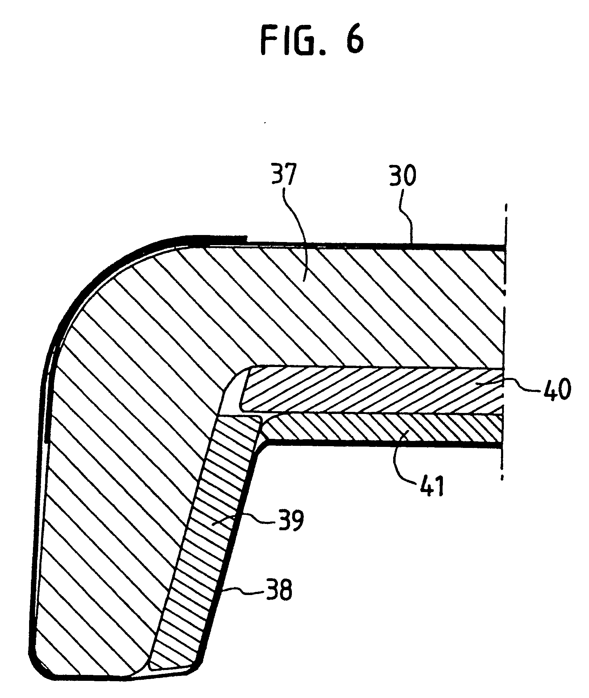

Instead of the reinforcing plate layer in Figures 1 and 2 there is a fibre fabric reinforced outer layer 30 of a wear resistant material attached to the seat. In Figure 3 the layer 30 is attached to the entire back and bottom of the seat, as indicated by the line of extension 31 in Figure 4. The layer extends also a short distance around the seat corners up onto the sides of a seat, as shown in Figure 6.

Preferably, the fibre fabric is a carbon fibre fabric. Other fabrics having similar strenght characteristics may of course be used. The water resistant layer incorporating the fibre fabric may be a layer of plastics, for instance of the vinyl type.

Straps 32 for anchoring the child seat to a vehicle mounted seat extend through slots in the layer 13 of high strength material, preferably a material of high tensile strength and of the carbon fibre reinforced type mentioned. Such slots maintain the straps in a fixed position relative the bottom of the seat, meaning that the slots establish well defined, in practice almost fixed through passages for straps 32 and connection strap pieces 32a. As appears from Figure 3 there is a coupling device between each strap 32 and each strap piece 32a allowing tight fastening of straps 32 and 32a around the vehicle mounted seat.

The free ends of the straps 32 and 32a are attached to plates 33, 34 and 35 (Figure 7), preferably of metal, placed against the upper side 36 of the seat body 37. The body consists of a constructional cellular plastics, for instance "STYROPOR" (a registered trade mark), which is a polystyrene type of plastics material.

In Figure 6 there is a more detailed view of the child seat. Reference numeral 38 denotes an outer clothing of a suitable synthetic material, for instance polyamide. Reference numeral 39 denotes side pieces of cellular plastics, reference numeral 40 denotes a shock absorbing cellular plastics layer, 41 denotes a vehicle seat contact layer also of cellular plastics, 37 denotes the body of "STYROPOR" and 30 denotes the reinforcing fibre fabric.

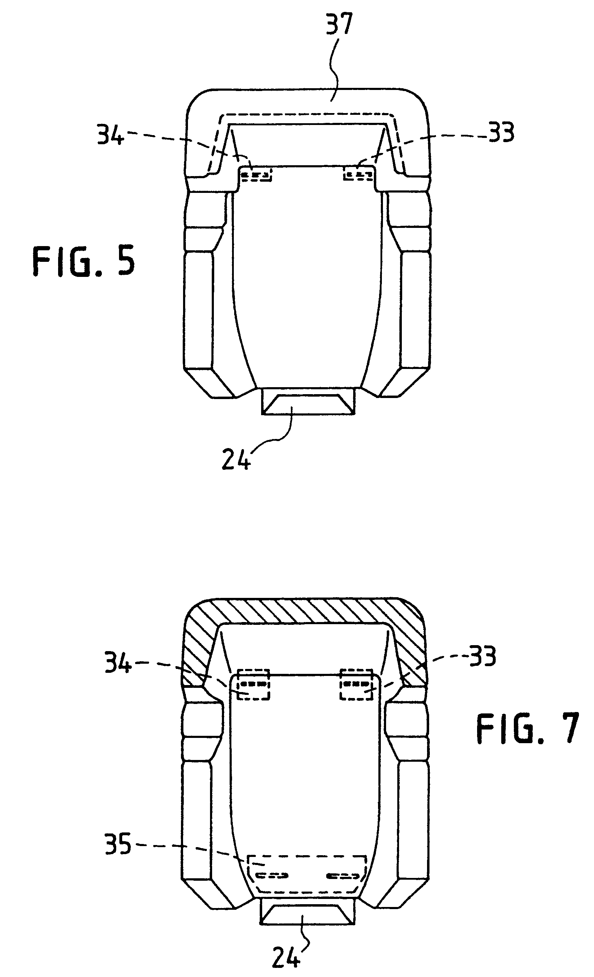

In the embodiment of the child seat shown in Figures 3 to 7 the combination of the fibre reinforced outer layer 30 covering the back of the seat and the cellular constructional plastics of the body form a composite seat structure that withstands extremely high strain of the type that might occur in a car accident. The high tensile strength characteristics of the layer 30 prevents the slots, through which the attachment straps are guided, from being torn up, instead the slots form an efficient means for fixing the position of the straps relative the bottom at the lower side of the seat.

The attachment of the straps to plates at the upper side of the child seat form an efficient anchoring means for the straps.

The flexible outer high tensile strength layer 30 eliminates concentration of strain in that any deformation tendency of the body 37 immediately is transferred to the layer 30 and uniformly distributed along the layer.

Although a specific embodiment of the invention has been described with reference to the drawings, it is realized that the inventive idea of course is delimited only by the accompanying claims.

## Claims

1. A child seat for use on an existing vehicle seat (23), the child seat (10) comprising a seat member (14), a back member (13), side members (15) and a surface layer (18, 30) and having attachment straps (19, 32) for securing the child seat to the vehicle seat (23), **characterized** in that the attachment straps (19, 32) are placable around the vehicle seat (23) for maintaining the child seat against the vehicle seat (23) by tightening the straps (19, 32), and that an anchoring member (24) is attached to the child seat (10) and is arranged to be gripped by an existing vehicle belt.

2. A child seat according to claim 1, **characterized** in that the surface layer (18, 30) of at least the seat member (14) is of a high strength material, and that said attachment straps (19, 32) are fixed to said high strength surface layer (18, 30).

3. A child seat according to claim 2, **characterized** in that the anchoring member is attached to the layer of high strength material of the child seat.

4. A child seat according to claim 1, **characterized** in that the straps are arranged for tightening also an insert pillow (25), preferably of a somewhat resilient material, between the bottom of the child seat and the vehicle seat.

5. A child seat according to claim 2 or 4, **characterized** in that the layer (18, 30) of a high strength material comprises at least one plate.

6. A child seat according to claim 5, **characterized** in that the attachment strap comprises two length adjustable straps (19) attached to the plate (18) at the front edge of the seat member (14), and two strap attachment members (22) at the back edge of the seat member (14).

7. A child seat according to claim 6, **characterized** in that the child seat (10) has means (16) to fix the vehicle belt for placing the child seat (10) with the back member (13) thereof in the driving direction, and that the seat member angle of the child seat is determined by the position of the insert pillow (25), the child seat being such that the back member (13) thereof has at least a portion for abutment against the instrument panel (12) of the vehicle.

8. A child seat according to anyone or any of the preceding claims, **characterized** in that the anchoring member (24) is arranged for being gripped by a hip belt in the vehicle.

9. A child seat according to claim 5, **characterized** in that the plate (18) covers the major part of the lower side of the seat member (14) and the major part of the outside of the back member (13).

10. A child seat according to anyone or any of the preceding claims, **characterized** in that the side members of the child seat extend along the seat member (14) as well as the back member (13) and are provided with means (26) for accomodating an adaption insert (27) that adapts the child seat to the body size of the child seat passenger.

11. A child seat according to claim 2, **characterized** in that the layer of high strength material comprises a fibre fabric reinforced layer (30) of a wear resistant material.

12. A child seat according to claim 11, **characterized** in that said layer extends along the entire back member (13) of the child seat and up onto the side members of the seat.

13. A child seat according to claim 13, **characterized** in that the fibre fabric comprises carbon fibres, and that the wear resistant material comprises a plastics material.

## Patentansprüche

1. Ein Kindersitz zur Verwendung auf einem vorhandenen Fahrzeugsitz (23), wobei der Kindersitz (10) ein Sitzelement (14), ein Rückenelement (13), Seitenelemente (15) und eine Oberflächenschicht (18, 30) umfaßt und Befestigungsgurte (19, 32) zum Befestigen des Kindersitzes an dem Fahrzeugsitz (23) aufweist, dadurch gekennzeichnet, daß die Befestigungsgurte (19, 32) um den Fahrzeugsitz (23) herumlegbar sind, um den Kindersitz durch Anziehen der Gurte (19, 32) auf dem Fahrzeugsitz (23) zu halten, und daß ein Verankerungselement (24) an dem Kindersitz (10) befestigt und zum Ergreifen durch einen vorhandenen Fahrzeuggurt eingerichtet ist.

2. Ein Kindersitz gemäß Anspruch 1, dadurch gekennzeichnet, daß die Oberflächenschicht (18, 30) mindestens des Sitzelements (14) aus einem hochfesten Werkstoff besteht und daß die genannten Befestigungsgurte (19, 32) an der genannten hochfesten Oberflächenschicht (18, 30) befestigt sind.

3. Ein Kindersitz gemäß Anspruch 2, dadurch gekennzeichnet, daß das Verankerungselement an der Schicht aus hochfestem Werkstoff des Kindersitzes befestigt ist.

4. Ein Kindersitz gemäß Anspruch 1, dadurch gekennzeichnet, daß die Gurte auch zum Einspannen eines Einsatzkissens (25), welches vorzugsweise aus einem etwas elastischen Werkstoff besteht, zwischen der Unterseite des Kindersitzes und dem Fahrzeugsitz eingerichtet sind.

5. Ein Kindersitz gemäß Anspruch 2 oder 4, dadurch gekennzeichnet, daß die Schicht (18, 30) aus einem hochfesten Werkstoff mindestens eine Platte umfaßt.

6. Ein Kindersitz gemäß Anspruch 5, dadurch gekennzeichnet, daß der Befestigungsgurt zwei längenverstellbare Gurte (19), welche an der Platte (18) an der Vorderkante des Sitzelements (14) befestigt sind, und zwei Gurtbefestigungselemente (22) an der Hinterkante des Sitzelements (14) umfaßt.

7. Ein Kindersitz gemäß Anspruch 6, dadurch gekennzeichnet, daß der Kindersitz (10) Mittel (16) aufweist, um den Fahrzeuggurt so zu befestigen, daß der Kindersitz (10) mit dessen Rückenelement (13) in Fahrtrichtung ausgerichtet wird, und daß der Sitzelementwinkel des Kindersitzes durch die Stellung des Einsatzkissens (25) bestimmt wird, wobei der Kindersitz so eingerichtet ist, daß sein Rückenelement (13) mindestens einen Teil aufweist, der zum Anliegen an der Instrumententafel (12) des Fahrzeugs eingerichtet ist.

8. Ein Kindersitz gemäß einem oder mehreren der vorstehenden Ansprüche, dadurch gekennzeichnet, daß das Verankerungselement (24) so eingerichtet ist, daß es durch einen in dem Fahrzeug vorhandenen Beckengurt ergriffen werden kann.

9. Ein Kindersitz gemäß Anspruch 5, dadurch gekennzeichnet, daß die Platte (18) den überwiegenden Teil der Unterseite des Sitzelements (14) und den überwiegenden Teil der Außenseite des Rückenelements (13) überdeckt.

10. Ein Kindersitz gemäß einem oder mehreren der vorstehenden Ansprüche, dadurch gekennzeichnet, daß die Seitenelemente des Kindersitzes sich längs des Sitzelements (14) sowie des Rückenelements (13) erstrecken und mit Mitteln (26) zur Aufnahme eines Anpaßeinsatzes (27) eingerichtet sind, welcher den Kindersitz an die Körpergröße des den Kindersitz einnehmenden Fahrgastes anpaßt.

11. Ein Kindersitz gemäß Anspruch 2, dadurch gekennzeichnet, daß die Schicht aus hochfestem Werkstoff eine mit Fasergewebe verstärkte Schicht (30) aus einem verschleißfesten Werkstoff umfaßt.

12. Ein Kindersitz gemäß Anspruch 11, dadurch gekennzeichnet, daß die genannte Schicht sich längs des gesamten Rückenelements (13) des Kindersitzes und bis auf die Seitenelemente des Sitzes herauf erstreckt.

13. Ein Kindersitz gemäß Anspruch 12, dadurch gekennzeichnet, daß das Fasergewebe Kohlenstoffasern umfaßt und daß der verschleißfeste Werkstoff einen Kunststoff umfaßt.

**Revendications**

1. Siège d'enfant utilisable sur un siège de véhicule existant (23), le siège d'enfant (10) comprenant un élément formant siège (14), un élément formant dossier (13), des éléments latéraux (15) et une couche de surface (18, 30) et comportant des sangles de fixation (19, 32) pour fixer le siège d'enfant sur le siège de véhicule (23), caractérisé en ce que les sangles de fixation (19, 32) peuvent être placées autour du siège de véhicule (23) pour maintenir le siège d'enfant contre le siège de véhicule (23) par serrage des sangles (19, 32), et en ce qu'un élément d'ancrage (24) est fixé au siège d'enfant (10) et est agencé de manière à être saisi par une ceinture de véhicule existante.

2. Siège d'enfant selon la revendication 1, caractérisé en ce que la couche de surface (18, 30) d'au moins l'élément formant siège (14) est en un matériau de grande résistance et en ce que lesdites sangles de fixation (19, 32) sont fixées à ladite couche de surface de grande résistance (18, 30).

3. Siège d'enfant selon la revendicaton 2, caractérisé en ce que l'élément d'ancrage est fixé à la couche en matériau de grande résistance du siège d'enfant.

4. Siège d'enfant selon la revendication 1, caractérisé en ce que les sangles sont agencées de manière à serrer également un coussin d'insertion (25), de préférence en un matériau sensiblement élastique, entre le fond du siège d'enfant et le siège de véhicule.

5. Siège d'enfant selon la revendication 2 ou 4, caractérisé en ce que la couche (18, 30) en matériau de grande résistance comprend au moins une plaque.

6. Siège d'enfant selon la revendication 5, caractérisé en ce que la sangle de fixation comprend deux sangles (19) de longueur réglable fixées à la plaque (18) au niveau du bord antérieur de l'élément formant siège (14) et deux éléments de fixation de sangle (22) au niveau du bord postérieur de l'élément formant siège (14).

7. Siège d'enfant selon la revendication 6, caractérisé en ce que le siège d'enfant (10) comporte des moyens (16) pour fixer la ceinture du véhicule pour placer le siège d'enfant (10) avec son élément formant dossier (13) dans la direction de conduite, et en ce que l'angle de l'élément formant siège du siège d'enfant est déterminé par la position du coussin d'insertion (25), le siège d'enfant étant tel que son élément formant dossier (13) comporte au moins une partie destinée à s'appuyer contre le tableau de bord (12) du véhicule.

8. Siège d'enfant selon l'une quelconque des revendications précédentes, caractérisé en ce que l'élément d'ancrage (24) est agencé de manière à être saisi par une ceinture de hanche du véhicule.

9. Siège d'enfant selon la revendication 5, caractérisé en ce que la plaque (18) recouvre la majeure partie du côté inférieur de l'élément formant siège (14) et la majeure partie du côté extérieur de l'élément formant dossier (13).

10. Siège d'enfant selon l'une quelconque des revendications précédentes, caractérisé en ce que les éléments latéraux du siège d'enfant s'étendent le long de l'élément formant siège (14) et de l'élément formant dossier (13) et sont munis de moyens (26) destinés à recevoir une pièce d'insertion d'adaptation (27) qui adapte le siège d'enfant à la taille du corps de l'occupant du siège d'enfant.

11. Siège d'enfant selon la revendication 2, caractérisé en ce que la couche de matériau de grande résistance comprend une couche (30), en matériau résistant à l'usure, renforcée par un tissu fibreux.

12. Siège d'enfant selon la revendication 11, caractérisé en ce que ladite couche s'étend sur tout l'élément formant dossier (13) du siège d'enfant et remonte sur les éléments latéraux du siège.

13. Siège d'enfant selon la revendication 11, caractérisé en ce que le tissu fibreux comprend des fibres de carbone et en ce que le matériau résistant à l'usure comprend une matière plastique.

# FIG. 1

# FIG. 2

FIG. 3

29

37

30

25

24

36

30

32a

32

FIG. 4

39

38

37

40

30

40

24

25

31

FIG. 5

FIG. 7

## FIG. 6